# EUROPEAN PATENT APPLICATION

(11) **EP 4 733 936 A1**
(43) Date of publication of application: **29.04.2026**
(21) Application number: 25210024.3
(22) Date of filing: 21.10.2025
(51) Int. Cl.: G06F 9/455

(54) **TIME MANAGEMENT IN A VIRTUALIZED COMPUTER**

(30) Priority: 22.10.2024 US 202418923578
(71) Applicant: VMware LLC, Palo Alto, CA 94304 (US)
(72) Inventor: Rishi, Abhinav, 134116 Panchkula (IN); Gupta, Shubham, 210201 Banda (IN)
(74) Representative: Dilg, Haeusler, Schindelmann Patentanwaltsgesellschaft mbH

(57) **Abstract**

An example computer includes: a hardware platform having a central processing unit (CPU), a memory, and a hardware clock; a hypervisor executing on the CPU and managing the hardware platform; a first virtual machine (VM) supported by the hypervisor and having a passthrough connection to the hardware clock; first guest software executing in the first VM, the first guest software including a first system clock synchronized by communication with the hardware clock via the passthrough connection; a second VM supported by the hypervisor; and second guest software executing in the second VM, the second guest software including a second system clock synchronized with the first system clock via a first portion of the memory shared between the first VM and the second VM, the first portion of the memory coordinated by the hypervisor.

## Description

### BACKGROUND

Virtualization in a computer may be abstraction, by software, of physical components of the computer into virtual components. The physical components can include central processing unit (CPU), memory, storage, and network components. This abstraction can allow multiple operating systems and applications to execute concurrently on a single computer, each within its own isolated virtual machine (VM). Software executing on the computer, referred to as a hypervisor, can manage the creation and operation of these VMs. That is, a hypervisor may be software used to manage virtualization on a computer.

More specifically, a computer may be an electronic machine that stores and processes data. A host machine may be a computer that executes a hypervisor to manage VM(s) (e.g., the computer "hosts" the VM(s)). A host machine may also be referred to as a virtualized computer. The host machine can include physical hardware, which may be physical components of a computer (e.g., CPU, memory, storage, network components). A VM may be software and data that exhibits the behavior of a computer. A VM can include virtual hardware, which may be abstractions of the host machine's physical hardware created and managed by the hypervisor. Virtual hardware can include virtual CPU, virtual memory, virtual storage, and virtual network components, each of which may be abstractions created by the hypervisor and supported by corresponding physical components. An operating system may be software that manages resources and provides common services for other software to access the resources. The resources managed by the operating system can be physical hardware of a computer (e.g., the hypervisor can be a type of operating system). A guest operating system may be an operating system executing on the computer along with the hypervisor, but where the managed resources include virtual hardware of a VM. A computer can execute multiple VMs and hence multiple guest operating systems. A guest operating system can manage access to the virtual hardware by other software. Guest software may be software executing in the context of a VM, e.g., a guest operating system and the other software managed by the guest operating system.

An operating system, such as a hypervisor and a guest operating system, can manage time. An operating system can have a timekeeping subsystem that provides a clock referred to herein as a system clock that tracks time referred herein as system time. A system clock can be a count of the number of ticks that have transpired since some arbitrary fixed date and time known as an epoch. A tick may be measured in real number of seconds (e.g., one second, 100 nanoseconds, etc.). An operating system can convert system time into calendar time (e.g., calendar date and time of day), which can be a form more suitable for human comprehension. An operating system can control its system clock based on hardware device(s) that track time. Examples of such hardware devices include a real-time clock (RTC) and CPU-based time stamp counters (TSCs).

A system clock can be characterized accuracy, precision, and resolution. Accuracy of a clock may be a measure of how close its time is with respect to a reference clock or time standard. The Coordinated Universal Time (UTC), for example, is a well known and used time standard. Precision of a clock may be a measure of how consistent repeated measurements are relative to a reference clock. The distinction between accuracy and precision can be understood as follows: a clock can be inaccurate by being at an offset from a reference clock, but its precision is determined by how well the clock maintains this offset over repeated measurements. Resolution of a clock may be the smallest possible difference between two consecutive measurements.

Software managed by a guest operating system of a VM may require accurate and precise time. Such software can include applications used in telecommunications, financial services, and entertainment, where accurate timestamping can be essential for functions such as, for example, packet reassembly, financial transaction sequencing, and media synchronization. The guest operating system can maintain a system clock, which can be based on an underlying virtual hardware clock of the VM. The hypervisor can create the virtual hardware clock, which in turn can be based on the system clock of the hypervisor. The system clock of the hypervisor can be based on a hardware timing device of the computer. Thus, the accuracy and precision of the system clock of the guest operating system can depend on the accuracy and precision of the computer's hardware timing device, the accuracy and precision of the hypervisor system clock, and the accuracy and precision of the virtual hardware clock. The accuracy and precision of the system clock of a guest operating system can be further affected by latencies in the layers of software.

### SUMMARY

In an embodiment, a computer can include a hardware platform having a central processing unit (CPU), a memory, and a hardware clock. The computer can include a hypervisor executing on the CPU and managing the hardware platform. The computer can include a first virtual machine (VM) supported by the hypervisor and having a passthrough connection to the hardware clock. The computer can include first guest software executing in the first VM, the first guest software including a first system clock synchronized by communication with the hardware clock via the passthrough connection. The computer can include a second VM supported by the hypervisor. The computer can include second guest software executing in the second VM, the second guest software including a second system clock synchronized with the first system clock via a first portion of the memory shared between the first VM and the second VM, the first portion of the memory coordinated by the hypervisor.

Further embodiments include a method for performing the operations of the computer and non-transitory computer-readable storage medium comprising instructions that cause a computer system to carry out the method.

### BRIEF DESCRIPTION OF THE DRAWINGS

Fig. 1 is a block diagram depicting a computing system according to some embodiments.
Fig. 2 is a block diagram depicting a computer according to some embodiments.
Fig. 3 is a block diagram depicting a logical view of computer according to some embodiments.
Fig. 4 is a flow diagram depicting a method of time management in a virtualized computing system according to some embodiments.
Fig. 5 is a flow diagram depicting a method of time management in a virtualized computing system according to some embodiments.

### DETAILED DESCRIPTION

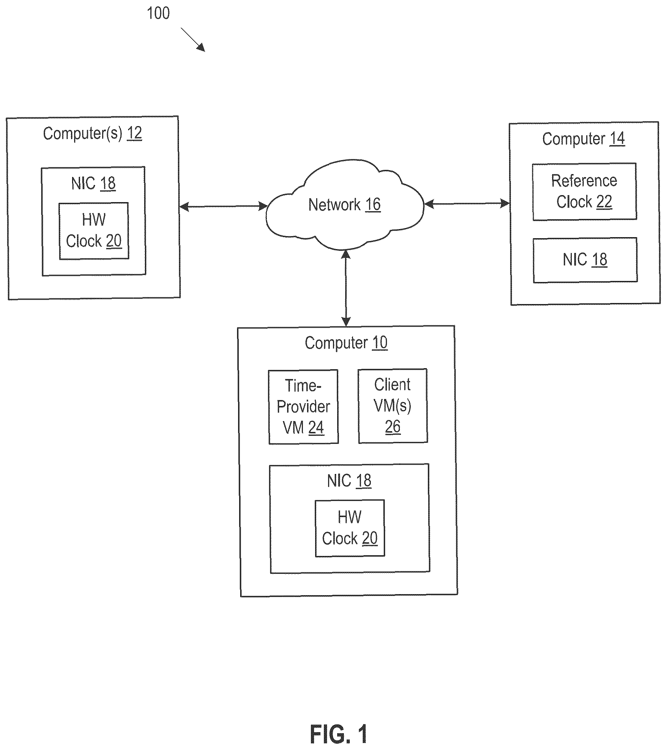

Fig. 1 is a block diagram depicting a computing system 100 according to some embodiments. Computing system 100 can include computers coupled to a network 16. The computers can include a computer 10, one or more computers 12, and a computer 14. A network may be devices connected by network nodes for communication with one another. The devices can be computers, as shown in the example of Fig. 1. A network node may be a connection point in the network. Example network nodes include network switches, network hubs, network bridges, network routers, wireless access points, and the like (not specifically shown). Each computer 12 can include a network interface controller (NIC) 18 having a hardware clock 20 (shown as HW clock 20). A NIC may be a physical hardware component that connects a computer to a network. A hardware clock may be a physical hardware component that tracks time. Tracking time, for example, may be the counting of ticks with respect to an epoch. Hardware implementations of NIC 18 and hardware clock 20 are well known in the art. For example, NIC 18 can be implemented on a circuit board connected to a bus in a computer (sometimes referred to as a card). Hardware clock 20 can be implemented as a circuit, such as an oscillator that beats at some frequency and a counter to count the beats.

Computer 14 can include a reference clock 22. A reference clock may be a source of time that can be used as a reference. Reference clock 22 can provide a reference time for computing system 100. Reference clock 22 can count ticks with respect to an epoch. Reference clock 22 can be synchronized with a time standard, such as UTC, International Atomic Time (TAI), or the like within some measure of accuracy. Synchronizing, as used herein, may be aligning time tracked by a clock with time tracked by another clock. Computer 14 can include a NIC 18 for connecting computer 14 to network 16. Reference clock 22 can be a part of NIC 18 or external to NIC 18.

Computer 10 can include a NIC 18 having a hardware clock 20. Computer 10 can be virtualized and execute a time-provider VM 24 and a client VM 26. A time-provider VM may be a VM that provides a source of time. A client VM may be a VM that synchronizes its time with a source of time. In computer 10, each client VM 26 can synchronize its time with a source of time supplied by time-provider VM 24. Time-provider VM 24 can track time using hardware clock 20 as a reference. Embodiments of time-provider VM 24 are described below.

Hardware clocks 20 in computing system 100 can be synchronized with reference clock 22 using a protocol. A protocol may be a set of procedures for exchanging data between devices. For example, computers 10, 12, and 14 can exchange data over network 16 using protocols that implement layers of the Open Systems Interconnection (OSI) model, such as the ubiquitous Ethernet and Transmission Control Protocol/Internet Protocol (TCP/IP) protocols. In some embodiments, the protocol used to synchronize clocks in computing system 100 can be the Precision Time Protocol (PTP) as defined in the IEEE 1588 standard and as is well known in the art. For purposes of clarity by example, some aspects of synchronization hardware clocks are described with respect to PTP. Those skilled in the art will appreciate that a protocol similar to PTP can be employed and that the time-provider VM 24 does not depend on any particular time synchronization protocol that is in use to synchronize hardware clocks 20.

PTP defines a network protocol used to synchronize clocks with a precision that can be on the order of less than a microsecond. PTP can be used in environments where precise timing is critical, such as industrial automation, telecommunications, financial services, and entertainment to name a few. In PTP, one clock can be designated as a leader that is a reference for all other clocks. Each clock other than the leader can be designated as a follower. Follower clocks can adjust their time to match the leader clock. PTP can achieve clock synchronization through a series of message exchanges between the leader and follower clocks, e.g., message exchanges between NICs 18 connected to network 16. A message may be a unit of data. NICs 18 can use hardware clocks 20 to timestamp the messages as the messages are exchanged. With timestamps collected from message exchanges, follower clocks can determine: round-trip delay (network latency), which can be the time it takes for messages to travel between the follower clock and the leader clock; and offset from the leader clock, which can be the difference between the follower clock's time and the leader clock's time. The round-trip delay and offset values can be used to adjust a follower clock and align its time with that of the leader clock. NICs 18 can use PTP to synchronize hardware clocks 20, which can be follower clocks, with reference clock 22, which can be the leader clock.

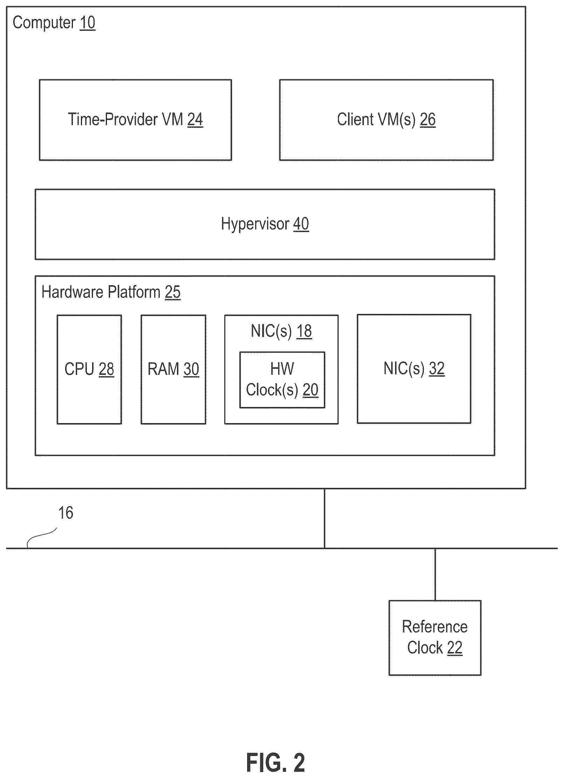

Software that requires precise and accurate timing can execute in a VM, such as a client VM 26. Computer 10 can execute a hypervisor (shown in Fig. 2) to manage VMs and virtualization of its hardware components, which include NIC 18 and hardware clock 20. Techniques are described herein that enable a client VM 26 to synchronize its time with that of time-provider VM 24. The hypervisor can manage the hardware platform. Time-provider VM 24 can synchronize its time using hardware clock 20. The time management can be performed with little or no degradation in accuracy and precision by the software between guest software in a VM and hardware clock 20. Some embodiments for time management in a virtualized computer are described below.

Fig. 2 is a block diagram depicting a computer 10 according to some embodiments. Computer 10 can include software executing on a hardware platform 25. Hardware platform 25 can include conventional computer components, such as a central processing unit (CPU) 28, memory (e.g., random access memory (RAM) 30), and one or more NICs, among other well-known components. A CPU may be a circuit that executes instructions of program(s). Software may be programs executed by a CPU. A memory may be a circuit that stores data. RAM is a type of memory that is well known for use in computers. CPU 28 can be implemented using one or more integrated circuits (ICs). CPU 28 can execute instructions of the software, for example, instructions that perform one or more operations described herein, which may be stored in RAM 30. The NICs of computer 10 can include one or more NICs 18. Each NIC 18 can have a hardware clock 20. The NICs of computer 10 can also include one or more NICs 32. Each NIC 32 may omit a hardware clock. NIC(s) 18 and NIC(s) 32 (if present) can be coupled to network 16. Each NIC 18 can use a protocol to synchronize its hardware clock 20 with reference clock 22 (e.g., PTP). The software of computer 10 can include a hypervisor 40. Hypervisor 40 can include instructions executed by CPU 28 to virtualize hardware platform 25 for use by VMs, e.g., time-provider VM 24 and client VM(s) 26.

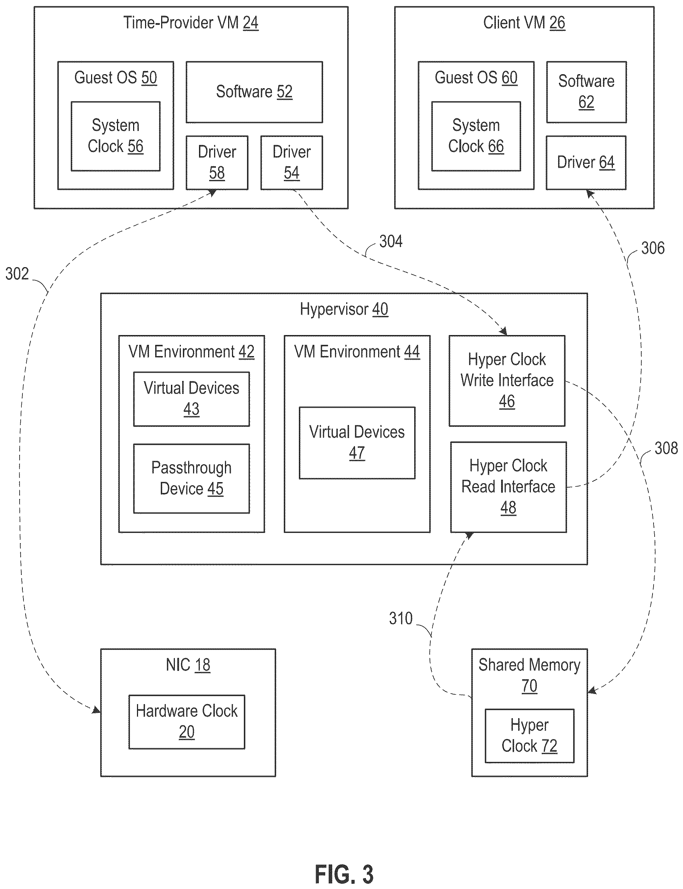

Fig. 3 is a block diagram depicting a logical view of computer 10 according to some embodiments. Guest software can execute in time-provider VM 24. The guest software can include guest operating system (OS) 50, software 52, a driver 54, and a driver 58. A driver may be software that facilitates communication between other software and a physical device or a virtual device. Guest OS 50 can maintain a system clock 56. Software 52 can synchronize system clock with hardware clock 20 as described further herein. Software 52 can also supply time from system clock 56 for use by client VM(s) 26 as described further herein.

Hypervisor 40 can create a VM environment 42 for time-provider VM 24. A VM environment may be data and procedures for executing a VM. VM environment 42 can include virtual devices 43 and a passthrough device 45. A virtual device may be data and procedures for controlling access by guest software in a VM to a shared device, which can be a hardware device managed by the hypervisor or a software device created by the hypervisor. A shared device may be a device (hardware- or software-based) shared by VMs and the hypervisor. Virtual devices 43 can include, for example, a virtual CPU, virtual memory, a virtual storage device, a virtual NIC, and the like. Virtual devices 43 can control access to the underlying shared device. For example, this control can be in the form of instruction traps to hypervisor 40. Guest software can include instructions that access a virtual device as if the virtual device was a hardware device. Hypervisor 40 can trap the instruction so that execution is diverted from the guest software to hypervisor 40. This allows hypervisor 40 to control access to shared devices by multiple VMs.

In contrast to a virtual device, a passthrough device may be data and procedures that allow guest software in a VM to access a device exclusively (e.g., a hardware- or software-based device). That is, a passthrough device can be assigned to a specific VM to the exclusion of other VMs and the hypervisor itself. A VM can include a passthrough connection to a passthrough device. A passthrough connection may be a connection to a passthrough device. Passthrough device 45 can allow guest software in time-provider VM 24 exclusive access to NIC 18 and hardware clock 20 thereof. In some embodiments, passthrough device 45 can be implemented using PCI passthrough. PCI passthrough (where PCI stands for Peripheral Component Interconnect) may be a virtualization technology that allows a VM direct access to a PCI device on a computer. PCI passthrough can bypass the hypervisor's emulation or virtualization layers, enabling a VM to use the device as if the device were physically attached to the VM. For example, in contrast to a virtual device, hypervisor 40 may omit trapping instructions of the guest software that access a passthrough device.

Driver 58 can provide the guest software in time-provider VM 24 access to hardware clock 20. Since NIC 18 can be attached to time-provider VM 24 as passthrough device 45, driver 58 can interface directly with NIC 18 and hardware clock 20 without interference by hypervisor 40. In some embodiments, software 52 can use driver 58 to obtain time information from hardware clock 20 and synchronize system clock 56 to hardware clock 20 using the time information (e.g., a time offset). Software 52 can periodically perform the alignment of system clock 56 and hardware clock 20 for the synchronization. Direct access to hardware clock 20 can improve accuracy and precision of system clock 56 as compared to access through hypervisor 40, which can introduce latency and degrade clock accuracy and precision. Direct interaction between driver 58 and NIC 18 is illustrated by communication path 302.

Guest software can execute in a client VM 26. The guest software can include a guest OS 60, software 62, and a driver 64. Hypervisor 40 can create VM environment 44 for client VM 26. VM environment 44 can include virtual devices 47. Guest OS 60 can maintain a system clock 66. Software 62 can use time from system clock 66. For example, software 62 can perform time-critical functions requiring time within some defined accuracy and/or precision. Time-provider VM 24 can be a source of time that satisfies the accuracy and/or precision requirements of software 62. Guest OS 60 can use driver 64 to adjust system clock 66 based on the source of time from time-provider VM 24 (e.g., to synchronize system clock 66 and system clock 56). Clock synchronization between time-provider VM 24 and client VM 26 can be performed using data exchange through a shared memory, as discussed further below.

Some guest software in a VM may be unaware of the virtualization of the computer. That is, some guest software may operate as if executing on the hardware platform of the computer without virtualization software. This may be referred to as full virtualization. Paravirtualization may be a virtualization technique where some guest software can communicate with the hypervisor (e.g., the guest software is aware of the hypervisor). This communication can be through application programming interfaces (APIs) of the hypervisor, for example. An instruction of guest software that calls an API of hypervisor may be referred to as a hypercall.

In some embodiments, hypervisor 40 can include a hyper clock write interface 46 and a hyper clock read interface 48. Hypervisor 40 can allocate and manage shared memory 70 in RAM 30. Shared memory 70 can store data implementing a hyper clock 72. A hyper clock may be a source of time managed by hypervisor 40. A hyper clock interface may be an API or the like that provides access shared memory 70 and hyper clock 72. In some embodiments, driver 54 in time-provider VM 24 can use paravirtualization to write time information to shared memory 70 and update hyper clock 72. For example, driver 54 can make hypercalls to hyper clock write interface 46 in order to write data to shared memory 70 and update hyper clock 72 based on output of system clock 56 (e.g., time of system clock). Interaction between driver 54 and hyper clock write interface 46 is illustrated by a communication path 304. Hyper clock write interface 46 can write data to shared memory 70, illustrated by a communication path 308.

In some embodiments, driver 64 in client VM 26 can use paravirtualization to read time information from shared memory 70 and update system clock 66. For example, driver 64 can make hypercalls to hyper clock read interface 48 in order to read data from shared memory 70 and update system clock 66 based on time of hyper clock 72. Interaction between driver 64 and hyper clock read interface 48 is illustrated by a communication path 306. Hyper clock read interface 48 can read data from shared memory 70, illustrated by a communication path 310.

The embodiments of time management described above can by used to provide accurate and/or precise time to software executing in a VM. The techniques can be advantageous when the hypervisor cannot offer accurate and precise time to the VMs. For example, the hypervisor may only have software-based timekeeping, which may lack the accuracy and/or precision needed by guest software in a VM. Further, in some embodiments, a single time-provider VM can be used to provide precise and/or accurate time for guest software in multiple client VMs.

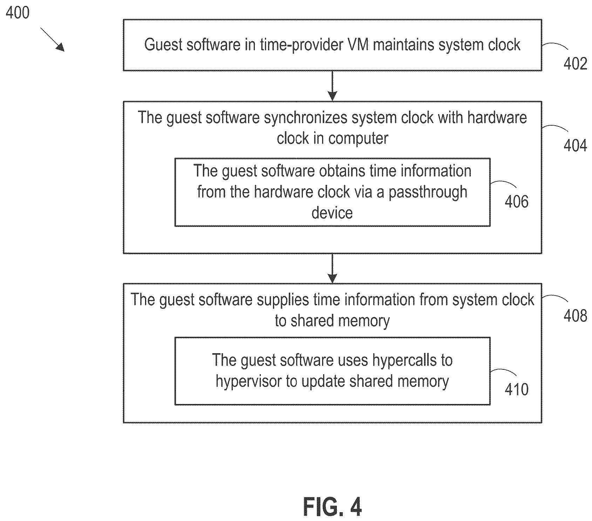

Fig. 4 is a flow diagram depicting a method 400 of time management in a virtualized computing system according to some embodiments. Method 400 begins at step 402, where guest software in time-provider VM 24 can maintain system clock 56. At step 404, the guest software and synchronize system clock 56 with hardware clock 20. For example, at step 406, the guest software can obtain time information from hardware clock 20 via passthrough device 45. At step 408, the guest software can supply time information from system clock 56 to shared memory 70. For example, at step 410, the guest software can use hypercalls to hypervisor 40 to update shared memory 70 through APIs of hypervisor 40.

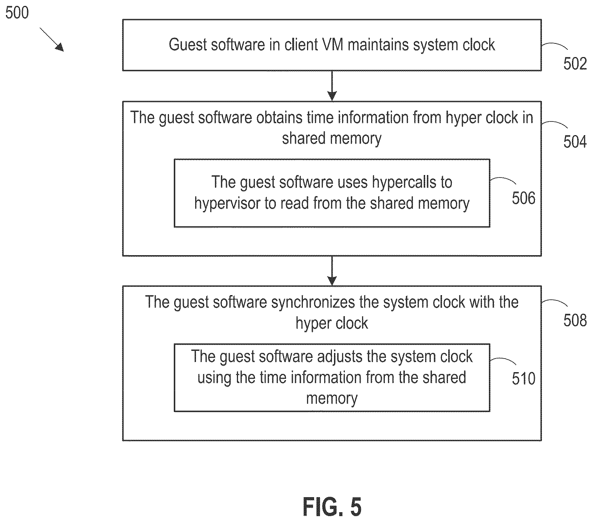

Fig. 5 is a flow diagram depicting a method 500 of time management in a virtualized computing system according to some embodiments. Method 500 begins at step 502, where guest software in a client VM 26 can maintain system clock 66. At step 504, the guest software can obtain time formation from hyper clock 72 in shared memory 70. For example, at step 506, the guest software can use hypercalls to hypervisor 40 to read from shared memory 70. At step 508, the guest software synchronizes system clock 66 with hyper clock 72. For example, at step 510, the guest software adjusts system clock 66 using the time information from shared memory 70.

While some processes and methods having various operations have been described, one or more embodiments also relate to a device or an apparatus for performing these operations. The apparatus may be specially constructed for required purposes, or the apparatus may be a general-purpose computer selectively activated or configured by a computer program stored in the computer. Various general-purpose machines may be used with computer programs written in accordance with the teachings herein, or it may be more convenient to construct a more specialized apparatus to perform the required operations.

One or more embodiments of the present invention may be implemented as one or more computer programs or as one or more computer program modules embodied in computer readable media. The term computer readable medium refers to any data storage device that can store data which can thereafter be input to a computer system. Computer readable media may be based on any existing or subsequently developed technology that embodies computer programs in a manner that enables a computer to read the programs. Examples of computer readable media are hard drives, NAS systems, read-only memory (ROM), RAM, compact disks (CDs), digital versatile disks (DVDs), magnetic tapes, and other optical and non-optical data storage devices. A computer readable medium can also be distributed over a network-coupled computer system so that the computer readable code is stored and executed in a distributed fashion.

As used herein, the phrase "at least one of" preceding a series of items, with the term "and" or "or" to separate any of the items, modifies the list as a whole, rather than each member of the list (i.e., each item). The phrase "at least one of" does not require selection of at least one of each item listed; rather, the phrase allows a meaning that includes at least one of any one of the items, and/or at least one of any combination of the items. By way of example, the phrases "at least one of A, B, and C" or "at least one of A, B, or C" each refer to only A, only B, or only C; and/or any combination of A, B, and C. In instances where it is intended that a selection be of "at least one of each of A, B, and C ," or alternatively, "at least one of A, at least one of B, and at least one of C," it is expressly described as such.

It will be understood that, although the terms "first," "second," etc. may be used herein to describe various elements, these elements should not be limited by these terms. These terms are only used to distinguish one element from another. For example, a first element could be termed a second element, and, similarly, a second element could be termed a first element, without departing from the scope of the present disclosure.

As used herein, the term "couple" or "connect" and its derivatives include: (a) electrical and communicative coupling; and (b) do not imply a direct connection, but rather may include intervening elements, unless described as "directly coupled" or "directly connected."

Although one or more embodiments of the present invention have been described in some detail for clarity of understanding, certain changes may be made within the scope of the claims. Accordingly, the described embodiments are to be considered as illustrative and not restrictive, and the scope of the claims is not to be limited to details given herein but may be modified within the scope and equivalents of the claims. In the claims, elements and/or steps do not imply any particular order of operation unless explicitly stated in the claims.

Boundaries between components, operations, and data stores are somewhat arbitrary, and particular operations are illustrated in the context of specific illustrative configurations. Other allocations of functionality are envisioned and may fall within the scope of the invention. In general, structures and functionalities presented as separate components in exemplary configurations may be implemented as a combined structure or component. Similarly, structures and functionalities presented as a single component may be implemented as separate components. These and other variations, additions, and improvements may fall within the scope of the appended claims.

## Claims

1. A computer, comprising:
a hardware platform having a central processing unit (CPU), a memory, and a hardware clock;
a hypervisor executing on the CPU and managing the hardware platform;
a first virtual machine (VM) supported by the hypervisor and having a passthrough connection to the hardware clock;
first guest software executing in the first VM, the first guest software including a first system clock synchronized by communication with the hardware clock via the passthrough connection;
a second VM supported by the hypervisor; and
second guest software executing in the second VM, the second guest software including a second system clock synchronized with the first system clock via a first portion of the memory shared between the first VM and the second VM, the first portion of the memory managed by the hypervisor.

2. The computer of claim 1, wherein
the hardware clock is part of a network interface controller (NIC) of the hardware platform.

3. The computer of claim 2, wherein
the NIC is configured to synchronize the hardware clock with another hardware clock using messages exchanged with another NIC over a network using a protocol.

4. The computer of claim 3, wherein
the first guest software includes a driver configured to interface with the hardware clock via the passthrough connection, a first guest operating system (OS) having the first system clock, and first software configured to synchronize the system clock with the hardware clock using the driver.

5. The computer of any one of the claims 1 to 4, wherein
the hypervisor includes a first interface configured to write to the first portion of the memory, and wherein the first guest software is configured update the first portion of the memory via the first interface using output of the first system clock.

6. The computer of claim 5, wherein
the hypervisor includes a second interface configured to read from the first portion of the memory, and wherein the second guest software is configured to read from the first portion of the memory via the second interface to update the second system clock.

7. The computer of any one of the claims 1 to 6, further comprising:
at least one additional VM supported by the hypervisor, the at least one additional VM having at least one additional system clock synchronized with the first system clock via the first portion of the memory;
wherein the passthrough connection comprises access to the hardware clock by the first VM exclusive of the hypervisor, the second VM, and the at least one additional VM.

8. A method of time management in a virtualized computer, comprising:
synchronizing, by first guest software executing in a first virtual machine (VM), a first system clock with a hardware clock by communication via a passthrough connection, the first VM supported by a hypervisor and having the passthrough connection to the hardware clock;
supplying, by the first guest software, time information to a first portion of a memory coordinated by the hypervisor; and
synchronizing, by second guest software executing in a second VM, a second system clock with the first system clock using the time information in the first portion of the memory, the first portion of the memory being shared between the first VM and the second VM.

9. The method of claim 8, wherein
the hardware clock is part of a network interface controller (NIC) of the virtualized computer.

10. The method of claim 9, wherein
the NIC is configured to synchronize the hardware clock with another hardware clock using messages exchanged with another NIC over a network using a protocol.

11. The method of claim 10, wherein
the first guest software includes a driver configured to interface with the hardware clock via the passthrough connection, a first guest operating system (OS) having the first system clock, and first software configured to synchronize the system clock with the hardware clock using the driver.

12. The method of any one of the claims 8 to 11, wherein
the hypervisor includes a first interface configured to write to the first portion of the memory, and wherein the first guest software is configured update the first portion of the memory via the first interface using output of the first system clock.

13. The method of claim 12, wherein
the hypervisor includes a second interface configured to read from the first portion of the memory, and wherein the second guest software is configured to read from the first portion of the memory via the second interface to update the second system clock.

14. The method of any one of the claims 8 to 13, further comprising:
synchronizing additional system clocks of additional VMs with the first system clock via the first portion of the memory
wherein the passthrough connection comprises access to the hardware clock by the first VM exclusive of the hypervisor, the second VM, and the additional VMs.

15. A non-transitory computer readable medium comprising instructions to be executed in a computing device to cause the computing device to carry out a method as set forth in any one of the preceding method claims.
